# EUROPEAN PATENT APPLICATION

(11) **EP 4 344 147 A1**
(43) Date of publication of application: **27.03.2024**
(21) Application number: 22885155.6
(22) Date of filing: 27.06.2022
(51) Int. Cl.: H04L 41/0654, H04J 3/16

(54) **TIME SLOT NEGOTIATION METHOD AND APPARATUS**

(30) Priority: 28.10.2021 CN 202111266392
(71) Applicant: Huawei Technologies Co., Ltd., Shenzhen, Guangdong 518129 (CN)
(72) Inventor: YU, Weiwei, Shenzhen, Guangdong 518129 (CN)
(74) Representative: Pfenning, Meinig & Partner mbB
(86) International application number: PCT/CN2022/101373
(87) International publication number: WO 2023/071249

(57) **Abstract**

Embodiments of this application disclose a slot negotiation method, where the method is implemented by a first communication apparatus serving as a receiving end. The first communication apparatus sends request information to a second communication apparatus serving as a transmitting end, where the request information requests the second communication apparatus to initiate a negotiation request for switching a FlexE slot. Then, the first communication apparatus receives the negotiation request sent by the second communication apparatus based on the request information. It can be learned that, in embodiments of this application, the first communication apparatus serving as the receiving end triggers negotiation of switching a FlexE slot, so that FlexE slot negotiation can be performed in a timely manner in some embodiments, and the first communication apparatus can communicate with the second communication apparatus through FlexE.

## Description

This application claims priority to Chinese Patent Application No. 202111266392.2, filed with the China National Intellectual Property Administration on October 28, 2021 and entitled "SLOT NEGOTIATION METHOD AND APPARATUS", which is incorporated herein by reference in its entirety.

### TECHNICAL FIELD

This application relates to the communication field, and in particular, to a slot negotiation method and apparatus.

### BACKGROUND

A flexible Ethernet (Flexible Ethernet, FlexE) technology has an advantage of on-demand flexible allocation of bandwidths, and can meet requirements of network scenarios such as mobile bearer, home broadband, and dedicated line access. Therefore, the FlexE technology is about to be applied more widely.

The FlexE technology may be deployed on both two network devices that are in a neighbor relationship, so that the two network devices communicate with each other by using the FlexE technology. After the FlexE technology is deployed on the foregoing two network devices, slot configuration further needs to be performed on the two network devices. The network device serving as a transmitting end sends data based on the slot configuration, and the network device serving as a receiving end parses the received data based on the slot configuration.

However, in some scenarios, slot configurations of the two network devices may be inconsistent. As a result, the two network devices cannot perform FlexE communication.

### SUMMARY

Embodiments of this application provide a slot negotiation method, so that slot configurations of two network devices in which FlexE is deployed are enabled to be consistent, and the two network devices may communicate with each other through the FlexE.

According to a first aspect, an embodiment of this application provides a slot negotiation method. The method may be implemented by a first communication apparatus serving as a receiving end. In an example, the first communication apparatus may send request information to a second communication apparatus serving as a transmitting end, where the request information requests the second communication apparatus to initiate a negotiation request for switching a FlexE slot. Then, the first communication apparatus receives the negotiation request sent by the second communication apparatus based on the request information. It can be learned that, in this embodiment of this application, the first communication apparatus serving as the receiving end may trigger negotiation of switching the FlexE slot, so that FlexE slot negotiation can be performed in a timely manner in some embodiments, and the first communication apparatus can communicate with the second communication apparatus through FlexE. In an example, the first communication apparatus may send the request information to the second communication apparatus after a fault of a link between the second communication apparatus and the first communication apparatus is recovered, so that the FlexE slot negotiation can be performed in a timely manner after the fault of the link is recovered.

In a possible implementation, the request information sent by the first communication apparatus to the second communication apparatus requests the second communication apparatus to initiate a negotiation request for switching a FlexE slot table, so that a FlexE slot table used by the first communication apparatus is consistent with a FlexE slot table used by the second communication apparatus.

In a possible implementation, the request information sent by the first communication apparatus to the second communication apparatus requests the second communication apparatus to initiate a slot negotiation request of a fine granularity service, so that a slot configuration of a fine granularity service used by the first communication apparatus is consistent with a slot configuration of a fine granularity service used by the second communication apparatus.

In a possible implementation, when a fault occurs on a link between the second communication apparatus and the first communication apparatus, a slot configuration of the first communication apparatus may be inconsistent with a slot configuration of the second communication apparatus. Correspondingly, waiting for the second communication apparatus to initiate FlexE slot configuration negotiation may result in long-time interruption of a service. In view of this, the first communication apparatus may send the request information to the second communication apparatus after the fault of the link between the second communication apparatus and the first communication apparatus is recovered, to effectively avoid long-time service interruption.

In a possible implementation, that optical signal jitter of the link disappears, a bit error rate of the link is less than or equal to a bit error rate threshold, a packet loss rate of the link is less than or equal to a packet loss rate threshold, and a link layer fault of the link disappears may all indicate that the fault of the link is recovered. Therefore, that the fault of the link is recovered may be one or more of the following: the optical signal jitter of the link disappears, the bit error rate of the link is less than or equal to the bit error rate threshold, the packet loss rate of the link is less than or equal to the packet loss rate threshold, and the link layer fault of the link disappears.

In a possible implementation, the first communication apparatus may send the request information to the second communication apparatus when the slot configuration used by the second communication apparatus is inconsistent with the slot configuration used by the first communication apparatus. In this way, when the slot configuration used by the first communication apparatus is inconsistent with the slot configuration used by the second communication apparatus, the FlexE slot negotiation may be performed as early as possible, so that the slot configuration of the first communication apparatus is consistent with the slot configuration of the second communication apparatus, and the first communication apparatus can normally perform FlexE communication with the second communication apparatus, to reduce a service interruption time.

In a possible implementation, that the slot configuration used by the second communication apparatus is inconsistent with the slot configuration used by the first communication apparatus may be that a slot table used by the second communication apparatus is inconsistent with a slot table used by the first communication apparatus. In this case, the request information is sent to the second communication apparatus when the slot table used by the second communication apparatus is inconsistent with the slot table used by the first communication apparatus.

In a possible implementation, that the slot configuration used by the second communication apparatus is inconsistent with the slot configuration used by the first communication apparatus may be that a slot configuration of a fine granularity service used by the second communication apparatus is inconsistent with a slot configuration of a fine granularity service used by the first communication apparatus. In this case, the first communication apparatus may send the request information to the second communication apparatus when the slot configuration of the fine granularity service used by the second communication apparatus is inconsistent with the slot configuration of the fine granularity service used by the first communication apparatus.

In a possible implementation, the first communication apparatus may send the request information to the second communication apparatus by using a FlexE overhead. In other words, the first communication apparatus may send the FlexE overhead including the request information to the second communication apparatus.

In a possible implementation, the request information may be carried in a reserved field in the FlexE overhead.

In a possible implementation, if a fine granularity service is transmitted between the first communication apparatus and the second communication apparatus, the first communication apparatus sends a data block including an FGU base frame overhead to the second communication apparatus. Therefore, when the request information requests the second communication apparatus to initiate the slot negotiation request of the fine granularity service, the first communication apparatus may include the request information in the data block including the FGU base frame overhead, and send the data block to the second communication apparatus.

In a possible implementation, the request information may be carried in a reserved field in the FGU base frame overhead.

According to a second aspect, an embodiment of this application provides a slot negotiation method, implemented by a second communication apparatus serving as a transmitting end. In an example, the second communication apparatus may receive request information sent by a first communication apparatus serving as a receiving end, where the request information requests the second communication apparatus to initiate a negotiation request for switching a flexible Ethernet FlexE slot; and the second communication apparatus may send the negotiation request to the first communication apparatus after receiving the request information. It can be learned that, in this embodiment of this application, the first communication apparatus serving as the receiving end may trigger negotiation of switching the FlexE slot, so that FlexE slot negotiation can be performed in a timely manner in some embodiments, and the first communication apparatus can communicate with the second communication apparatus through FlexE. In an example, the first communication apparatus may send the request information to the second communication apparatus after a fault of a link between the second communication apparatus and the first communication apparatus is recovered, so that the FlexE slot negotiation can be performed in a timely manner after the fault of the link is recovered.

In a possible implementation, the request information requests the second communication apparatus to initiate a negotiation request for switching a FlexE slot table.

In a possible implementation, the request information requests the second communication apparatus to initiate a slot negotiation request of a fine granularity service.

In a possible implementation, the receiving the request information sent by the first communication apparatus includes:
receiving, after the fault of the link between the second communication apparatus and the first communication apparatus is recovered, the request information sent by the first communication apparatus.

In a possible implementation, that the fault of the link is recovered includes at least one of the following:
optical signal jitter of the link disappears;
a bit error rate of the link is less than or equal to a bit error rate threshold;
a packet loss rate of the link is less than or equal to a packet loss rate threshold; and
a link layer fault of the link disappears.

In a possible implementation, the receiving request information sent by a first communication apparatus serving as a receiving end includes:
receiving, when a slot configuration used by the second communication apparatus is inconsistent with a slot configuration used by the first communication apparatus, the request information sent by the first communication apparatus.

In a possible implementation, the receiving, when a slot configuration used by the second communication apparatus is inconsistent with a slot configuration used by the first communication apparatus, the request information sent by the first communication apparatus includes:
receiving, when a slot table used by the second communication apparatus is inconsistent with a slot table used by the first communication apparatus, the request information sent by the first communication apparatus.

In a possible implementation, the receiving, when a slot configuration used by the second communication apparatus is inconsistent with a slot configuration used by the first communication apparatus, the request information sent by the first communication apparatus includes:
receiving, when a slot configuration of a fine granularity service used by the second communication apparatus is inconsistent with a slot configuration of a fine granularity service used by the first communication apparatus, the request information sent by the first communication apparatus.

In a possible implementation, the receiving the request information sent by the first communication apparatus includes:
receiving a FlexE overhead sent by the first communication apparatus, where the FlexE overhead includes the request information.

In a possible implementation, the FlexE overhead includes a reserved field, and the reserved field carries the request information.

In a possible implementation, the receiving the request information sent by the first communication apparatus includes:
receiving a data block sent by the first communication apparatus, where the data block includes a fine granularity unit FGU base frame overhead, and the FGU base frame overhead includes the request information.

In a possible implementation, the FGU base frame overhead includes a reserved field, and the reserved field carries the request information.

According to a third aspect, an embodiment of this application provides a slot negotiation apparatus, used in a first communication apparatus serving as a receiving end. The apparatus includes: a sending unit, configured to send request information to a second communication apparatus serving as a transmitting end, where the request information requests the second communication apparatus to initiate a negotiation request for switching a flexible Ethernet FlexE slot; and a receiving unit, configured to receive the negotiation request sent by the second communication apparatus.

In a possible implementation, the request information requests the second communication apparatus to initiate a negotiation request for switching a FlexE slot table.

In a possible implementation, the request information requests the second communication apparatus to initiate a slot negotiation request of a fine granularity service.

In a possible implementation, the sending unit is configured to send the request information to the second communication apparatus after a fault of a link between the second communication apparatus and the first communication apparatus is recovered.

In a possible implementation, that the fault of the link is recovered includes at least one of the following: optical signal jitter of the link disappears; a bit error rate of the link is less than or equal to a bit error rate threshold; a packet loss rate of the link is less than or equal to a packet loss rate threshold; and a link layer fault of the link disappears.

In a possible implementation, the sending unit is configured to send the request information to the second communication apparatus when a slot configuration used by the second communication apparatus is inconsistent with a slot configuration used by the first communication apparatus.

In a possible implementation, the sending unit is configured to send the request information to the second communication apparatus when a slot table used by the second communication apparatus is inconsistent with a slot table used by the first communication apparatus.

In a possible implementation, the sending unit is configured to send the request information to the second communication apparatus when a slot configuration of a fine granularity service used by the second communication apparatus is inconsistent with a slot configuration of a fine granularity service used by the first communication apparatus.

In a possible implementation, the sending unit is configured to send a FlexE overhead to the second communication apparatus, where the FlexE overhead includes the request information.

In a possible implementation, the FlexE overhead includes a reserved field, and the reserved field carries the request information.

In a possible implementation, the sending unit is configured to: send a data block to the second communication apparatus, where the data block includes a fine granularity unit FGU base frame overhead, and the FGU base frame overhead includes the request information.

In a possible implementation, the FGU base frame overhead includes a reserved field, and the reserved field carries the request information.

According to a fourth aspect, an embodiment of this application provides a slot negotiation apparatus, used in a second communication apparatus serving as a transmitting end. The apparatus includes: a receiving unit, configured to receive request information sent by a first communication apparatus serving as a receiving end, where the request information requests the second communication apparatus to initiate a negotiation request for switching a flexible Ethernet FlexE slot; and a sending unit, configured to send the negotiation request to the first communication apparatus.

In a possible implementation, the request information requests the second communication apparatus to initiate a negotiation request for switching a FlexE slot table.

In a possible implementation, the request information requests the second communication apparatus to initiate a slot negotiation request of a fine granularity service.

In a possible implementation, the receiving unit is configured to receive, after a fault of a link between the second communication apparatus and the first communication apparatus is recovered, the request information sent by the first communication apparatus.

In a possible implementation, that the fault of the link is recovered includes at least one of the following: optical signal jitter of the link disappears; a bit error rate of the link is less than or equal to a bit error rate threshold; a packet loss rate of the link is less than or equal to a packet loss rate threshold; and a link layer fault of the link disappears.

In a possible implementation, the receiving unit is configured to receive, when a slot configuration used by the second communication apparatus is inconsistent with a slot configuration used by the first communication apparatus, the request information sent by the first communication apparatus.

In a possible implementation, the receiving unit is configured to receive, when a slot table used by the second communication apparatus is inconsistent with a slot table used by the first communication apparatus, the request information sent by the first communication apparatus.

In a possible implementation, the receiving unit is configured to receive, when a slot configuration of a fine granularity service used by the second communication apparatus is inconsistent with a slot configuration of a fine granularity service used by the first communication apparatus, the request information sent by the first communication apparatus.

In a possible implementation, the receiving unit is configured to receive a FlexE overhead sent by the first communication apparatus, where the FlexE overhead includes the request information.

In a possible implementation, the FlexE overhead includes a reserved field, and the reserved field carries the request information.

In a possible implementation, the receiving unit is configured to: receive a data block sent by the first communication apparatus, where the data block includes a fine granularity unit FGU base frame overhead, and the FGU base frame overhead includes the request information.

In a possible implementation, the FGU base frame overhead includes a reserved field, and the reserved field carries the request information.

According to a fifth aspect, this application provides a first communication apparatus. The first communication apparatus includes a memory and a processor, the memory is configured to store program code, and the processor is configured to execute instructions in the program code, to enable the first communication apparatus to perform the method according to the first aspect and any implementation of the first aspect.

According to a sixth aspect, this application provides a first communication apparatus. The first communication apparatus includes a communication interface and a processor, the communication interface is configured to perform receiving and sending operations performed by the first communication apparatus according to the first aspect and any implementation of the first aspect, and the processor is configured to perform another operation other than the receiving and sending operations performed by the first communication apparatus according to the first aspect and any implementation of the first aspect.

According to a seventh aspect, this application provides a second communication apparatus. The second communication apparatus includes a memory and a processor, the memory is configured to store program code, and the processor is configured to execute instructions in the program code, to enable the second communication apparatus to perform the method according to the second aspect and any implementation of the second aspect.

According to an eighth aspect, this application provides a second communication apparatus. The second communication apparatus includes a communication interface and a processor, the communication interface is configured to perform receiving and sending operations performed by the first communication apparatus according to the second aspect and any implementation of the second aspect, and the processor is configured to perform another operation other than the receiving and sending operations performed by the first communication apparatus according to the second aspect and any implementation of the second aspect.

According to a ninth aspect, an embodiment of this application provides a computer-readable storage medium, including instructions or a computer program. When the instructions or the computer program are/is run on a computer, the computer is enabled to perform the method according to any implementation of the first aspect, or perform the method according to any implementation of the second aspect.

According to a tenth aspect, an embodiment of this application provides a computer program product including instructions or a computer program. When the computer program product is run on a computer, the computer is enabled to perform the method according to any implementation of the first aspect, or perform the method according to any implementation of the second aspect.

According to an eleventh aspect, an embodiment of this application provides a communication system. The communication system includes a first communication apparatus that performs the method according to the first aspect and any implementation of the first aspect, and a second communication apparatus that performs the method according to the second aspect and any implementation of the second aspect.

### BRIEF DESCRIPTION OF DRAWINGS

To describe technical solutions in embodiments of this application or in the current technology more clearly, the following briefly describes the accompanying drawings used in describing embodiments or the current technology. It is clear that the accompanying drawings in the following descriptions are only some of embodiments in this application, and a person of ordinary skill in the art may still derive other drawings from these accompanying drawings without creative efforts.
FIG. 1 is a schematic diagram of a structure of data according to an embodiment of this application;
FIG. 2 is a diagram of signaling exchange of slot negotiation;
FIG. 3 is a diagram of signaling exchange of a slot negotiation method according to an embodiment of this application;
FIG. 4 is a schematic diagram of a structure of a slot negotiation apparatus according to an embodiment of this application;
FIG. 5 is a schematic diagram of a structure of a slot negotiation apparatus according to an embodiment of this application;
FIG. 6 is a schematic diagram of a structure of a communication apparatus according to an embodiment of this application; and
FIG. 7 is a schematic diagram of a structure of a communication apparatus according to an embodiment of this application.

### DESCRIPTION OF EMBODIMENTS

Embodiments of this application provide a slot negotiation method, so that slot configurations of two network devices in which FlexE is deployed are enabled to be consistent, and the two network devices may communicate with each other through the FlexE.

For ease of understanding, related content of the FlexE is first described.

FlexE group: Each FlexE group includes one or more PHYs. When a plurality of PHYs are included, the plurality of PHYs are physically independent. A network device to which a FlexE technology is applied may identify, by using numbers of the PHYs, PHYs that are included in one FlexE group, to implement a logical bonding of the plurality of PHYs. For example, the number of each PHY may be identified by using a number ranging from 1 to 254, and 0 and 255 are reserved numbers. A number of a PHY may correspond to an interface on the network device. A same PHY needs to be identified by using a same number between two adjacent network devices. Numbers of PHYs included in a FlexE group are not necessarily consecutive. Generally, one FlexE group exists between two network devices. However, a quantity of FlexE groups between two network devices is not limited to one in this application. In other words, there may be a plurality of FlexE groups between two network devices. One PHY may carry at least one client, and one client may be transmitted on at least one PHY. The FlexE may support mapping and transmission of any quantity of different FlexE clients on any group of PHYs, to implement functions such as a PHY bonding, channelization, and sub-rating.

FlexE client: A FlexE client corresponds to various user interfaces or bandwidths of a network. The FlexE client represents a client data stream transmitted in a specified slot (one or more slots) in a FlexE group. One FlexE group may carry a plurality of FlexE clients, and one FlexE client may correspond to one or more user service data streams (also referred to as MAC Clients). The FlexE client may be flexibly configured based on a bandwidth requirement, and supports Ethernet MAC data streams of various rates (for example, data streams of 10G, 40G, n*25G, and even non-standard rates), for example, the data streams may be transmitted to a FlexE shim layer in a 64B/66B encoding mode. Clients sent through a same FlexE group need to share a same clock, and these clients need to perform adaptation based on an allocated slot rate. In this application, the FlexE client (also referred to as a FlexE client interface) may transmit a service data stream of a corresponding FlexE client. The FlexE client interface is a logical interface. Each FlexE interface may be logically divided into one or more FlexE client interfaces, each FlexE interface may be divided into a plurality of slots in time domain, and each FlexE client interface occupies at least one of the plurality of slots.

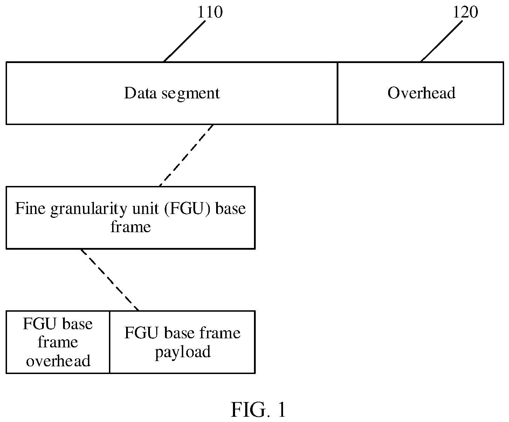

FlexE shim: As an additional logical layer inserted between a MAC layer and a PHY (PCS sublayer) in a conventional Ethernet architecture, a FlexE shim is a core architecture for implementing the FlexE technology based on a calendar slot distribution mechanism. For a transmitting end, a main function of the FlexE shim is to encapsulate data into a pre-divided slot (slot). Then, each slot obtained through division is mapped, based on a FlexE slot table, to a PHY in a FlexE group for transmission. Each slot is mapped to one PHY in the FlexE group. A 100GE PHY is used as an example. The FlexE Shim layer may divide each 100GE PHY in the FlexE group into a data bearer channel of 20 slots (slots) and a bandwidth corresponding to each slot is 5 Gbps. Each time sending 64/66B data of 1023 *20 slots, the PHY inserts a FlexE overhead (Overhead, OH), to notify a receiving end how to parse received data. Refer to FIG. 1. FIG. 1 is a schematic diagram of a structure of data according to an embodiment of this application. As shown in FIG. 1, data sent by a transmitting end includes a data segment 110 and an overhead 120. A FlexE Shim of a receiving end extracts a FlexE OH to form a multiframe (MultiFrame). Then, data of a FlexE Group is restored to original data of a FlexE client based on a FlexE slot table and information in the multiframe, and the original data is continuously transmitted. Eight FlexE OHs may form one FlexE overhead frame, and 32 FlexE overhead frames may form one FlexE multiframe. In this embodiment of this application, the "FlexE slot table" may be referred to as a "slot table" for short.

Fine granularity service: In some embodiments, a slot corresponding to a large bandwidth may be further divided into a plurality of sub-slots (sub-slots) for carrying a fine granularity service. For example, a slot of which a corresponding bandwidth is 5 Gbps is further divided into 480 sub-slots based on a granularity of 10 Mbps, and the 480 sub-slots carry the fine granularity service. For example, a first sub-slot, a third sub-slot, and a fifth sub-slot in the 480 sub-slots carry a fine granularity service 1. When the fine granularity service is transmitted, for a transmitting end, a FlexE shim may encapsulate, based on a slot configuration of a fine granularity, data into a pre-divided sub-slot for transmission. For a receiving end, the FlexE shim may restore, based on the slot configuration of the fine granularity, the data received in the slot of which the corresponding bandwidth is 5 Gbps into original fine granularity service data for continuous transmission. In an example, the fine granularity service data may be carried in the data segment 110 shown in FIG. 1. The data segment 110 includes a plurality of data blocks, that is, the fine granularity service is carried in a data block instead of an overhead block. In an example, the data segment 110 may include a fine granularity unit (fine granularity unit, FGU) base frame, the FGU base frame includes an FGU base frame overhead and an FGU base frame payload, the FGU base frame overhead carries the slot configuration of the fine granularity, and the FGU base frame payload carries the fine granularity service data. The slot configuration of the fine granularity may be a mapping relationship between a sub-slot and a sub-client.

For a FlexE OH insertion manner and a structure of an overhead frame, refer to related descriptions of Institute of Electrical and Electronics Engineers (Institute of Electrical and Electronics Engineers, IEEE) 802.3. Details are not described herein again. For a structure of the FGU base frame, refer to, for example, related descriptions in a China Mobile communications enterprise standard. Details are not described herein again.

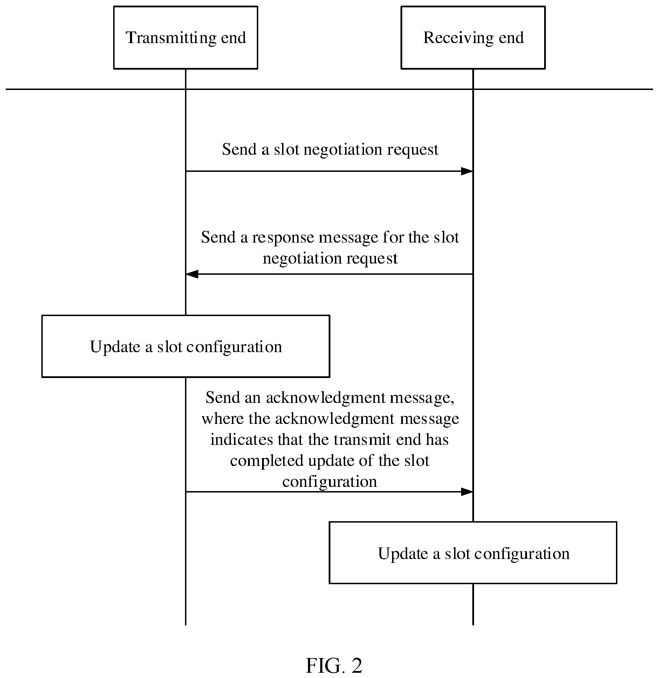

If slot configurations of two network devices are inconsistent, the two network devices cannot perform FlexE communication. That the slot configurations of two network devices are inconsistent means that slot configurations of two FlexE groups are inconsistent. Currently, a network device serving as a transmitting end may initiate FlexE slot negotiation, so that the slot configurations of the two network devices are consistent. However, in some scenarios, if the network device serving as the transmitting end initiates the FlexE slot negotiation, a long-time service interruption may occur between the two network devices. In an example, after the network device serving as the transmitting end initiates the FlexE slot negotiation, the network device serving as the transmitting end completes update of a slot configuration, and sends an acknowledgment message of completing update of the slot configuration to a network device serving as a receiving end. However, because a fault occurs on a link between the transmitting end and the receiving end, the receiving end does not receive the foregoing acknowledgment message. Therefore, the receiving end does not perform the update operation on the slot configuration. As a result, the slot configuration of the network device serving as the transmitting end is inconsistent with the slot configuration of the network device serving as the receiving end. Descriptions are provided with reference to FIG. 2. FIG. 2 is a diagram of signaling exchange of slot negotiation. As shown in FIG. 2:
a transmitting end sends a slot negotiation request to a receiving end;
after receiving the slot negotiation request, the receiving end may send a response message for the slot negotiation request to the transmitting end;
after receiving the response message, the transmitting end may update the slot configuration; and further, the transmitting end sends an acknowledgment message to the receiving end, where the acknowledgment message indicates that the transmitting end has completed the updating of the slot configuration; and
after receiving the acknowledgment message, the receiving end updates the slot configuration, and in this case, slot negotiation between the transmitting end and the receiving end is completed.

However, in some scenarios, for example, after the receiving end sends the response message to the transmitting end, if a fault occurs on a link between the transmitting end and the receiving end, the receiving end cannot receive the acknowledgment message. Further, the receiving end does not update the slot configuration. However, because the transmitting end updates the slot configuration immediately after receiving the response message, the transmitting end updates the slot configuration, while the receiving end does not update the slot configuration. As a result, the slot configuration of the transmitting end is inconsistent with the slot configuration of the receiving end.

After this case occurs, currently, the receiving end only waits for the transmitting end to initiate slot negotiation again. If the transmitting end does not re-initiate the slot negotiation in a timely manner, a long-time service interruption occurs between the transmitting end and the receiving end.

The slot negotiation in this embodiment of this application may be negotiation of a FlexE slot table, or may be slot negotiation of a fine granularity service.

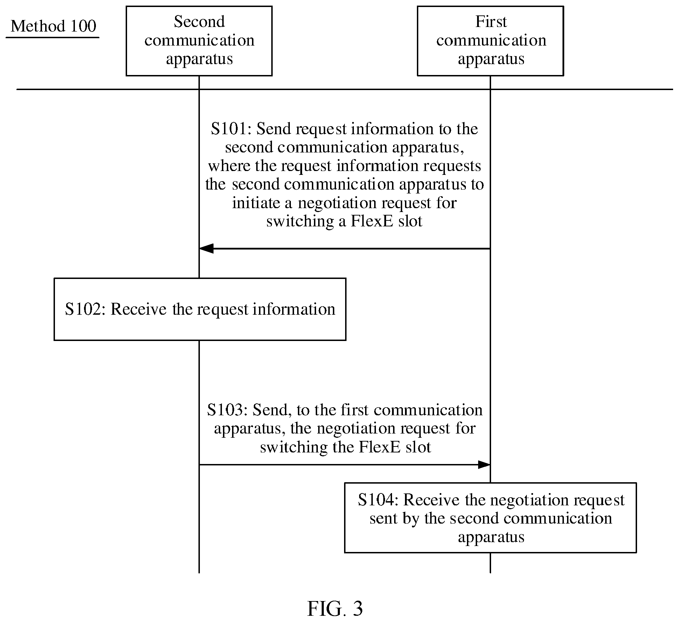

To resolve the foregoing problem, an embodiment of this application provides a slot negotiation method. FIG. 3 is a schematic flowchart of a slot negotiation method according to an embodiment of this application. For example, a method 100 shown in FIG. 3 may include the following S101 to S104.

It should be noted that a communication apparatus mentioned in this embodiment of this application may be a network device such as a switch or a router, or may be some components on a network device, for example, a board, a line card, or an interface on the network device, or may be a functional module on a network device, or may be a chip configured to implement the method in this application. This is not specifically limited in this embodiment of this application. The communication apparatuses may be directly connected through, for example, but not limited to, an Ethernet cable or an optical cable.

S101: A first communication apparatus sends request information to a second communication apparatus, where the request information requests the second communication apparatus to initiate a negotiation request for switching a FlexE slot.

The first communication apparatus herein serves as a receiving end, and the second communication apparatus serves as a transmitting end.

In an example, the negotiation request requests the second communication apparatus to initiate a negotiation request for switching a FlexE slot table. In an example, the first communication apparatus and the second communication apparatus each are locally configured with two slot tables: a table A and a table B. One slot table is in a usage state, and the other slot table is in a standby state. The negotiation request for switching the FlexE slot table may, for example, request to switch a used slot table from the table A to the table B. In still another example, if a fine granularity service is transmitted between the first communication apparatus and the second communication apparatus, the negotiation request requests the second communication apparatus to initiate a slot negotiation request of the fine granularity service.

It can be learned from the foregoing description of FIG. 2 that, when a fault occurs on a link between the second communication apparatus and the first communication apparatus, a slot configuration of the first communication apparatus may be inconsistent with a slot configuration of the second communication apparatus. Correspondingly, waiting for the second communication apparatus to initiate FlexE slot configuration negotiation may result in long-time interruption of a service. In view of this, in an example, the first communication apparatus may send the request information to the second communication apparatus after the fault of the link between the second communication apparatus and the first communication apparatus is recovered. In an example, the first communication apparatus may immediately send the request information to the second communication apparatus after detecting that the fault of the link is recovered. In this way, FlexE slot negotiation can be performed as early as possible after the fault of the link is recovered, so that the slot configuration of the first communication apparatus is consistent with the slot configuration of the second communication apparatus, and the first communication apparatus can normally perform FlexE communication with the second communication apparatus, to reduce a service interruption time.

In this embodiment of this application, it is considered that, that optical signal jitter of the link disappears, a bit error rate of the link is less than or equal to a bit error rate threshold, a packet loss rate of the link is less than or equal to a packet loss rate threshold, and a link layer fault of the link disappears may all indicate that the fault of the link is recovered. Therefore, that the fault of the link is recovered may be one or more of the following: the optical signal jitter of the link disappears, the bit error rate of the link is less than or equal to the bit error rate threshold, the packet loss rate of the link is less than or equal to the packet loss rate threshold, and the link layer fault of the link disappears.

In some embodiments, the first communication apparatus may determine, based on an optical power detected by an optical module of the first communication apparatus, that the optical signal jitter of the link disappears. For example, when the optical power is greater than a specific threshold, the first communication apparatus determines that the optical signal jitter of the link disappears.

In some embodiments, the first communication apparatus may determine the bit error rate of the link by using a forward error correction (forward error correction, FEC) technology.

In some embodiments, the first communication apparatus may determine the packet loss rate of the link by using an operation administration and maintenance (Operation Administration and Maintenance, OAM) technology or an in-situ flow information telemetry (in-situ Flow Information Telemetry, iFIT) technology.

In some embodiments, the first communication apparatus may determine, by sending a link layer discovery protocol (Link Layer Discovery Protocol, LLDP) packet to the second communication apparatus, that the link layer fault of the link is recovered. For example, when a response packet sent by the second communication apparatus for the LLDP packet is received, it may be determined that the link layer fault of the link is recovered.

In some embodiments, the first communication apparatus may send the request information to the second communication apparatus when a slot configuration used by the second communication apparatus is inconsistent with a slot configuration used by the first communication apparatus. In an example, the first communication apparatus may first determine the slot configuration used by the second communication apparatus, and then compare the slot configuration used by the first communication apparatus with the slot configuration used by the second communication apparatus. When determining that the slot configuration used by the first communication apparatus is inconsistent with the slot configuration used by the second communication apparatus, the first communication apparatus sends the request information to the second communication apparatus. In this way, when the slot configuration used by the first communication apparatus is inconsistent with the slot configuration used by the second communication apparatus, the FlexE slot negotiation may be performed as early as possible, so that the slot configuration of the first communication apparatus is consistent with the slot configuration of the second communication apparatus, and the first communication apparatus can normally perform FlexE communication with the second communication apparatus, to reduce a service interruption time.

It can be learned from the foregoing description of the FlexE technology that, that the slot configuration used by the second communication apparatus is inconsistent with the slot configuration used by the first communication apparatus may include two cases.

One case is that a slot table used by the second communication apparatus is inconsistent with a slot table used by the first communication apparatus. The other case is that a slot configuration of a fine granularity service used by the second communication apparatus is inconsistent with a slot configuration of a fine granularity service used by the first communication apparatus.

For the first case, because a FlexE overhead sent by the second communication apparatus to the first communication apparatus carries information about the slot table used by the second communication apparatus, the first communication apparatus may determine, by using the FlexE overhead sent by the second communication apparatus, the slot table used by the second communication apparatus, further compare the slot table used by the second communication apparatus with the slot table used by the first communication apparatus, and determines that the slot table used by the second communication apparatus is inconsistent with the slot table used by the first communication apparatus.

For the second case, because an FGU base frame overhead sent by the second communication apparatus to the first communication apparatus carries information about the slot configuration of the fine granularity service used by the second communication apparatus, the first communication apparatus may determine, by using the FGU base frame overhead sent by the second communication apparatus, the slot configuration of the fine granularity service used by the second communication apparatus, further compare the slot configuration of the fine granularity service used by the second communication apparatus with the slot configuration of the fine granularity service used by the first communication apparatus, and determines that the slot configuration of the fine granularity service used by the second communication apparatus is inconsistent with the slot configuration of the fine granularity service used by the first communication apparatus.

In this embodiment of this application, the first communication apparatus may send the request information to the second communication apparatus through a data channel. For example, the request information is sent to the second communication apparatus through a data channel for transmitting a data packet. Alternatively, the request information may be sent to the second communication apparatus through a management channel. For example, the request information is carried in an OAM message and sent to the second communication apparatus. This is not specifically limited in this embodiment of this application.

In an example, considering that FlexE communication is performed between the first communication apparatus and the second communication apparatus, the first communication apparatus may send a FlexE overhead to the second communication apparatus. As shown in FIG. 1, when a data segment is sent, a FlexE overhead is inserted. Therefore, when the request information requests the second communication apparatus to initiate the negotiation request for switching the FlexE slot table, the first communication apparatus may include the request information in the FlexE overhead, and send the FlexE overhead to the second communication apparatus. In some embodiments, the request information may be carried by using a reserved field in the FlexE overhead. Currently, in eight FlexE overheads that form a FlexE overhead frame, bits 17 to 63 in a second overhead and bits 35 to 47 in a third overhead are reserved fields. Therefore, some or all of the bits 17 to 63 in the second overhead, or some or all of the bits 35 to 47 in the third overhead may carry the request information. For example, one bit of the bits 17 to 63 in the second overhead carries the request information. When a value of the bit is 1, it indicates that the FlexE overhead carries the request information. For another example, one bit of the bits 35 to 47 in the third overhead carries the request information. When a value of the bit is 1, it indicates that the FlexE overhead carries the request information.

In addition, if a fine granularity service is transmitted between the first communication apparatus and the second communication apparatus, the first communication apparatus sends a data block including an FGU base frame overhead to the second communication apparatus. Therefore, when the request information requests the second communication apparatus to initiate the slot negotiation request of the fine granularity service, the first communication apparatus may include the request information in the data block including the FGU base frame overhead, and send the data block to the second communication apparatus. In some embodiments, the request information may be carried by using a reserved field in the FGU base frame overhead.

S102: The second communication apparatus receives the request information.

S103: The second communication apparatus sends, to the first communication apparatus, the negotiation request for switching the FlexE slot.

S104: The first communication apparatus receives the negotiation request sent by the second communication apparatus.

After the first communication apparatus sends the request information to the second communication apparatus, the second communication apparatus may receive the request information, and further initiate FlexE slot negotiation based on the request information. Specifically, the second communication apparatus may send, to the first communication apparatus, the negotiation request for switching the FlexE slot, and the first communication apparatus receives the negotiation request. In this case, the first communication apparatus and the second communication apparatus may start to perform FlexE slot negotiation.

It should be noted that, if the negotiation request requests to switch the FlexE slot table, in an example, the negotiation request may, for example, request to switch the used FlexE slot table from the table A to the table B. In this case, for a format of the negotiation request, refer to related descriptions of IEEE 802.3. Details are not described herein again.

If the negotiation request requests to switch the slot configuration of the fine granularity service, the negotiation request may include, for example, a mapping relationship between a sub-client identifier (identifier, ID) corresponding to each fine granularity service and a sub-slot corresponding to each sub-client ID.

For a subsequent process of the FlexE slot negotiation, refer to the foregoing description of FIG. 2. Details are not described herein again.

It can be learned from the foregoing descriptions that, in this embodiment of this application, the first communication apparatus serving as the receiving end may trigger negotiation of switching the FlexE slot, so that FlexE slot negotiation can be performed in a timely manner in some embodiments, and the first communication apparatus can communicate with the second communication apparatus through FlexE.

Based on the slot negotiation method provided in the foregoing embodiments, an embodiment of this application further provides a corresponding apparatus. The following describes the apparatus with reference to the accompanying drawings.

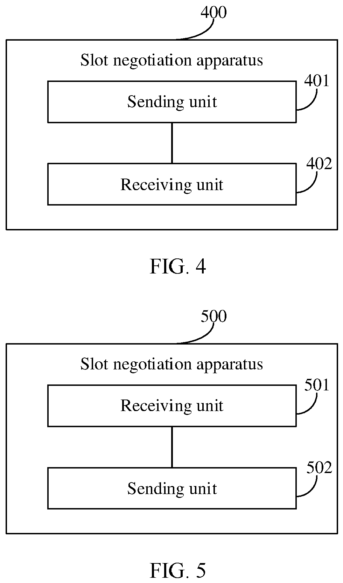

FIG. 4 is a schematic diagram of a structure of a slot negotiation apparatus according to an embodiment of this application. A slot negotiation apparatus 400 shown in FIG. 4 is configured to perform the steps performed by the first communication apparatus in the foregoing method 100. In an example, the slot negotiation apparatus 400 may include, for example, a sending unit 401 and a receiving unit 402.

The sending unit 401 is configured to send request information to a second communication apparatus serving as a transmitting end, where the request information requests the second communication apparatus to initiate a negotiation request for switching a flexible Ethernet FlexE slot.

The receiving unit 402 is configured to receive the negotiation request sent by the second communication apparatus.

In a possible implementation, the request information requests the second communication apparatus to initiate a negotiation request for switching a FlexE slot table.

In a possible implementation, the request information requests the second communication apparatus to initiate a slot negotiation request of a fine granularity service.

In a possible implementation, the sending unit 401 is configured to send the request information to the second communication apparatus after a fault of a link between the second communication apparatus and the first communication apparatus is recovered.

In a possible implementation, that the fault of the link is recovered includes at least one of the following: optical signal jitter of the link disappears; a bit error rate of the link is less than or equal to a bit error rate threshold; a packet loss rate of the link is less than or equal to a packet loss rate threshold; and a link layer fault of the link disappears.

In a possible implementation, the sending unit 401 is configured to send the request information to the second communication apparatus when a slot configuration used by the second communication apparatus is inconsistent with a slot configuration used by the first communication apparatus.

In a possible implementation, the sending unit 401 is configured to send the request information to the second communication apparatus when a slot table used by the second communication apparatus is inconsistent with a slot table used by the first communication apparatus.

In a possible implementation, the sending unit 401 is configured to send the request information to the second communication apparatus when a slot configuration of a fine granularity service used by the second communication apparatus is inconsistent with a slot configuration of a fine granularity service used by the first communication apparatus.

In a possible implementation, the sending unit 401 is configured to send a FlexE overhead to the second communication apparatus, where the FlexE overhead includes the request information.

In a possible implementation, the FlexE overhead includes a reserved field, and the reserved field carries the request information.

In a possible implementation, the sending unit 401 is configured to: send a data block to the second communication apparatus, where the data block includes a fine granularity unit FGU base frame overhead, and the FGU base frame overhead includes the request information.

In a possible implementation, the FGU base frame overhead includes a reserved field, and the reserved field carries the request information.

The apparatus 400 is an apparatus corresponding to the method performed by the first communication apparatus provided in the foregoing method embodiment, and a specific implementation of each unit of the apparatus 400 has the same concept as that in the foregoing method embodiment. Therefore, for the specific implementation of each unit of the apparatus 400, refer to the descriptions of the method performed by the first communication apparatus in the foregoing method embodiment. Details are not described herein again.

FIG. 5 is a schematic diagram of a structure of a slot negotiation apparatus according to an embodiment of this application. A slot negotiation apparatus 500 shown in FIG. 5 is configured to perform the steps performed by the second communication apparatus in the foregoing method 100. In an example, the slot negotiation apparatus 500 may include, for example, a receiving unit 501 and a sending unit 502.

The receiving unit 501 is configured to receive request information sent by a first communication apparatus serving as a receiving end, where the request information requests the second communication apparatus to initiate a negotiation request for switching a flexible Ethernet FlexE slot.

The sending unit 502 is configured to send the negotiation request to the first communication apparatus.

In a possible implementation, the request information requests the second communication apparatus to initiate a negotiation request for switching a FlexE slot table.

In a possible implementation, the request information requests the second communication apparatus to initiate a slot negotiation request of a fine granularity service.

In a possible implementation, the receiving unit 501 is configured to receive, after a fault of a link between the second communication apparatus and the first communication apparatus is recovered, the request information sent by the first communication apparatus.

In a possible implementation, that the fault of the link is recovered includes at least one of the following: optical signal jitter of the link disappears; a bit error rate of the link is less than or equal to a bit error rate threshold; a packet loss rate of the link is less than or equal to a packet loss rate threshold; and a link layer fault of the link disappears.

In a possible implementation, the receiving unit 501 is configured to receive, when a slot configuration used by the second communication apparatus is inconsistent with a slot configuration used by the first communication apparatus, the request information sent by the first communication apparatus.

In a possible implementation, the receiving unit 501 is configured to receive, when a slot table used by the second communication apparatus is inconsistent with a slot table used by the first communication apparatus, the request information sent by the first communication apparatus.

In a possible implementation, the receiving unit 501 is configured to:
receive, when a slot configuration of a fine granularity service used by the second communication apparatus is inconsistent with a slot configuration of a fine granularity service used by the first communication apparatus, the request information sent by the first communication apparatus.

In a possible implementation, the receiving unit 501 is configured to receive a FlexE overhead sent by the first communication apparatus, where the FlexE overhead includes the request information.

In a possible implementation, the FlexE overhead includes a reserved field, and the reserved field carries the request information.

In a possible implementation, the receiving unit 501 is configured to: receive a data block sent by the first communication apparatus, where the data block includes a fine granularity unit FGU base frame overhead, and the FGU base frame overhead includes the request information.

In a possible implementation, the FGU base frame overhead includes a reserved field, and the reserved field carries the request information.

The apparatus 500 is an apparatus corresponding to the method performed by the second communication apparatus provided in the foregoing method embodiment, and a specific implementation of each unit of the apparatus 500 has the same concept as that in the foregoing method embodiment. Therefore, for the specific implementation of each unit of the apparatus 500, refer to the descriptions of the method performed by the second communication apparatus in the foregoing method embodiment. Details are not described herein again.

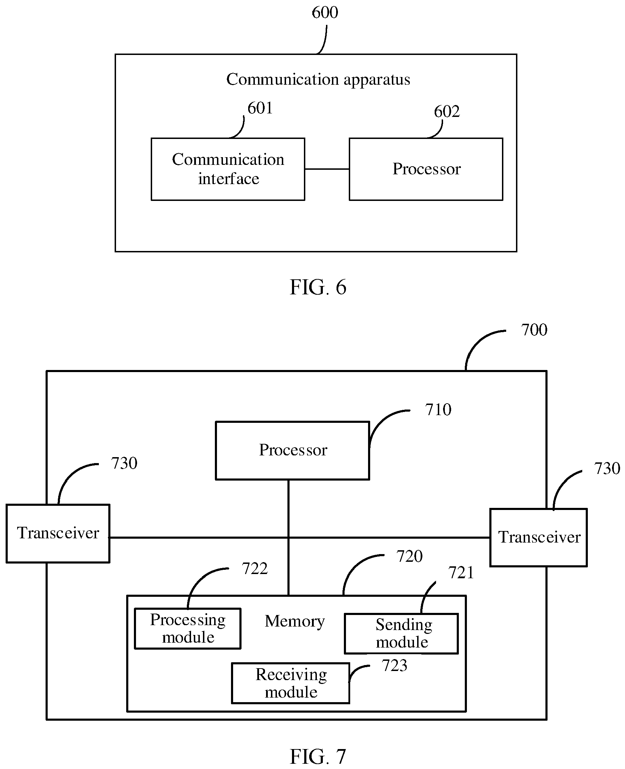

In addition, an embodiment of this application further provides a communication apparatus 600. FIG. 6 is a schematic diagram of a structure of a communication apparatus according to an embodiment of this application. The communication apparatus 600 includes a communication interface 601, and a processor 602 connected to the communication interface 601. The communication apparatus 600 may be configured to perform the method 100 in the foregoing embodiment.

In an example, the communication apparatus 600 may perform the method 100 in the foregoing embodiment. When the communication apparatus 600 is configured to perform the method 100 in the foregoing embodiment, the communication apparatus 600 is equivalent to the first communication apparatus in the method 100. The communication interface 601 is configured to perform receiving and sending operations performed by the first communication apparatus in the method 100. The processor 602 is configured to perform an operation other than the receiving and sending operations performed by the first communication apparatus in the method 100. For example, the communication interface 601 is configured to send request information to a second communication apparatus serving as a transmitting end, where the request information requests the second communication apparatus to initiate a negotiation request for switching a flexible Ethernet FlexE slot, and receive the negotiation request sent by the second communication apparatus. The processor 602 is configured to generate the request information.

In an example, the communication apparatus 600 may perform the method 100 in the foregoing embodiment. When the communication apparatus 600 is configured to perform the method 100 in the foregoing embodiment, the communication apparatus 600 is equivalent to the second communication apparatus in the method 100. The communication interface 601 is configured to perform receiving and sending operations performed by the second communication apparatus in the method 100. The processor 602 is configured to perform an operation other than the receiving and sending operations performed by the second communication apparatus in the method 100. For example, the communication interface 601 is configured to receive the request information sent by a first communication apparatus, where the request information requests the second communication apparatus to initiate a negotiation request for switching a flexible Ethernet FlexE slot, and send the negotiation request to the first communication apparatus. The processor 602 is configured to generate the negotiation request.

In addition, an embodiment of this application further provides a communication apparatus 700. FIG. 7 is a schematic diagram of a structure of a communication apparatus according to an embodiment of this application. The communication apparatus 700 may be configured to perform the method 100 in the foregoing embodiment.

As shown in FIG. 7, the communication apparatus 700 may include a processor 710, a memory 720 coupled to the processor 710, and a transceiver 730. The transceiver 730 may be, for example, a communication interface or an optical module. The processor 710 may be a central processing unit (English: central processing unit, CPU for short), a network processor (English: network processor, NP for short), or a combination of a CPU and an NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 710 may be one or more processors. The memory 720 may include a volatile memory (English: volatile memory), for example, a random-access memory (English: random-access memory, RAM for short). The memory may alternatively include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory 720 may alternatively include a combination of the foregoing types of memories. The memory 720 may be one or more memories. In an implementation, the memory 720 stores computer-readable instructions, and the computer-readable instructions include a plurality of software modules, for example, a sending module 721, a processing module 722, and a receiving module 723. After executing each software module, the processor 710 may perform a corresponding operation based on an indication of each software module. In this embodiment, an operation performed by one software module is actually an operation performed by the processor 710 based on the indication of the software module.

In an example, the communication apparatus 700 may perform the method 100 in the foregoing embodiment. When the communication apparatus 700 is configured to perform the method 100 in the foregoing embodiment, the communication apparatus 700 is equivalent to the first communication apparatus in the method 100. The transceiver 730 is configured to perform receiving and sending operations performed by the first communication apparatus in the method 100. The transceiver 710 is configured to perform an operation other than the receiving and sending operations performed by the first communication apparatus in the method 100. For example, the transceiver 730 is configured to send request information to a second communication apparatus serving as a transmitting end, where the request information requests the second communication apparatus to initiate a negotiation request for switching a flexible Ethernet FlexE slot, and receive the negotiation request sent by the second communication apparatus. The transceiver 710 is configured to generate the request information.

In an example, the communication apparatus 700 may perform the method 100 in the foregoing embodiment. When the communication apparatus 700 is configured to perform the method 100 in the foregoing embodiment, the communication apparatus 700 is equivalent to the second communication apparatus in the method 100. The transceiver 730 is configured to perform receiving and sending operations performed by the second communication apparatus in the method 100. The transceiver 710 is configured to perform an operation other than the receiving and sending operations performed by the second communication apparatus in the method 100. For example, the transceiver 730 is configured to receive the request information sent by a first communication apparatus, where the request information requests the second communication apparatus to initiate a negotiation request for switching a flexible Ethernet FlexE slot, and send the negotiation request to the first communication apparatus. The transceiver 710 is configured to generate the negotiation request.

This application further provides a computer-readable storage medium, and the computer-readable storage medium stores instructions. When the instructions are run on a computer, the computer is enabled to perform any one or more operations in the method (for example, the method 100) in the foregoing embodiments.

This application further provides a computer program product, including a computer program. When the computer program product is run on a computer, the computer is enabled to perform any one or more operations in the method (for example, the method 100) in the foregoing embodiments.

This application further provides a communication system, including the first communication apparatus and the second communication apparatus mentioned in the foregoing embodiments.

This application further provides a communication system, including at least one memory and at least one processor. The at least one memory stores instructions, and the at least one processor executes the instructions, to enable the communication system to perform any one or more operations in the method (for example, the method 100) in any one of the foregoing embodiments of this application.

In the specification, claims, and accompanying drawings of this application, the terms such as "first", "second", "third", and "fourth" (if any) are used to distinguish similar objects but not necessarily used to describe any particular order or sequence. It should be understood that data used in such a way is interchangeable in proper cases, so that embodiments described herein can be implemented in other orders than the order illustrated or described herein. In addition, the terms "include", "contain" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A person skilled in the art can clearly understand that, for convenience and conciseness of descriptions, for a detailed working process of the foregoing system, apparatus, and units, reference may be made to the corresponding processes in the foregoing method embodiments. Details are not described herein again.

In the several embodiments provided in this application, it should be understood that the disclosed system, apparatus, and method may be implemented in other manners. For example, the apparatus embodiments described above are merely examples. For example, division of the units is merely a logical service division and may be another division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or a part contributing to a current technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by using the software, the services may be stored in a computer-readable medium or may be used as one or more instructions or code in the computer-readable medium for transmission. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing specific implementations further describe the objectives, technical solutions in detail, and beneficial effects of the present invention. It can be understood that the foregoing descriptions are merely specific implementations of the present invention.

The foregoing embodiments are merely intended for describing the technical solutions of this application, but not for limiting this application. Although this application is described in detail with reference to the foregoing embodiments, a person of ordinary skill in the art is to understand that modifications may still be made to the technical solutions described in the foregoing embodiments or equivalent replacements may be made to some technical features thereof, and such modifications or replacements do not cause the essence of corresponding technical solutions to depart from the scope of the technical solutions of embodiments of this application.

## Claims

1. A slot negotiation method, implemented by a first communication apparatus serving as a receiving end, wherein the method comprises:
sending request information to a second communication apparatus serving as a transmitting end, wherein the request information requests the second communication apparatus to initiate a negotiation request for switching a flexible Ethernet FlexE slot; and
receiving the negotiation request sent by the second communication apparatus.

2. The method according to claim 1, wherein the request information requests the second communication apparatus to initiate a negotiation request for switching a FlexE slot table.

3. The method according to claim 1, wherein the request information requests the second communication apparatus to initiate a slot negotiation request of a fine granularity service.

4. The method according to any one of claims 1 to 3, wherein the sending request information to a second communication apparatus serving as a transmitting end comprises:
sending the request information to the second communication apparatus after a fault of a link between the second communication apparatus and the first communication apparatus is recovered.

5. The method according to claim 4, wherein that the fault of the link is recovered comprises at least one of the following:
optical signal jitter of the link disappears;
a bit error rate of the link is less than or equal to a bit error rate threshold;
a packet loss rate of the link is less than or equal to a packet loss rate threshold; and
a link layer fault of the link disappears.

6. The method according to claim 1, wherein the sending request information to a second communication apparatus serving as a transmitting end comprises:
sending the request information to the second communication apparatus when a slot configuration used by the second communication apparatus is inconsistent with a slot configuration used by the first communication apparatus.

7. The method according to claim 6, wherein the sending the request information to the second communication apparatus when a slot configuration used by the second communication apparatus is inconsistent with a slot configuration used by the first communication apparatus comprises:
sending the request information to the second communication apparatus when a slot table used by the second communication apparatus is inconsistent with a slot table used by the first communication apparatus.

8. The method according to claim 6, wherein the sending the request information to the second communication apparatus when a slot configuration used by the second communication apparatus is inconsistent with a slot configuration used by the first communication apparatus comprises:
sending the request information to the second communication apparatus when a slot configuration of a fine granularity service used by the second communication apparatus is inconsistent with a slot configuration of a fine granularity service used by the first communication apparatus.

9. The method according to claim 2, wherein the sending the request information to the second communication apparatus comprises:
sending a FlexE overhead to the second communication apparatus, wherein the FlexE overhead comprises the request information.

10. The method according to claim 9, wherein the FlexE overhead comprises a reserved field, and the reserved field carries the request information.

11. The method according to claim 3, wherein the sending the request information to the second communication apparatus comprises:
sending a data block to the second communication apparatus, wherein the data block comprises a fine granularity unit FGU base frame overhead, and the FGU base frame overhead comprises the request information.

12. The method according to claim 11, wherein the FGU base frame overhead comprises a reserved field, and the reserved field carries the request information.

13. A slot negotiation method, implemented by a second communication apparatus serving as a transmitting end, wherein the method comprises:
receiving request information sent by a first communication apparatus serving as a receiving end, wherein the request information requests the second communication apparatus to initiate a negotiation request for switching a flexible Ethernet FlexE slot; and
sending the negotiation request to the first communication apparatus.

14. The method according to claim 13, wherein the request information requests the second communication apparatus to initiate a negotiation request for switching a FlexE slot table.

15. The method according to claim 13, wherein the request information requests the second communication apparatus to initiate a slot negotiation request of a fine granularity service.

16. The method according to any one of claims 13 to 15, wherein the receiving the request information sent by the first communication apparatus comprises:
receiving, after a fault of a link between the second communication apparatus and the first communication apparatus is recovered, the request information sent by the first communication apparatus.

17. The method according to claim 16, wherein that the fault of the link is recovered comprises at least one of the following:
optical signal jitter of the link disappears;
a bit error rate of the link is less than or equal to a bit error rate threshold;
a packet loss rate of the link is less than or equal to a packet loss rate threshold; and
a link layer fault of the link disappears.

18. The method according to claim 13, wherein the receiving request information sent by a first communication apparatus serving as a receiving end comprises:
receiving, when a slot configuration used by the second communication apparatus is inconsistent with a slot configuration used by the first communication apparatus, the request information sent by the first communication apparatus.

19. The method according to claim 18, wherein the receiving, when a slot configuration used by the second communication apparatus is inconsistent with a slot configuration used by the first communication apparatus, the request information sent by the first communication apparatus comprises:
receiving, when a slot table used by the second communication apparatus is inconsistent with a slot table used by the first communication apparatus, the request information sent by the first communication apparatus.

20. The method according to claim 18, wherein the receiving, when a slot configuration used by the second communication apparatus is inconsistent with a slot configuration used by the first communication apparatus, the request information sent by the first communication apparatus comprises:
receiving, when a slot configuration of a fine granularity service used by the second communication apparatus is inconsistent with a slot configuration of a fine granularity service used by the first communication apparatus, the request information sent by the first communication apparatus.

21. The method according to claim 14, wherein the receiving the request information sent by the first communication apparatus comprises:
receiving a FlexE overhead sent by the first communication apparatus, wherein the FlexE overhead comprises the request information.

22. The method according to claim 21, wherein the FlexE overhead comprises a reserved field, and the reserved field carries the request information.

23. The method according to claim 15, wherein the receiving the request information sent by the first communication apparatus comprises:
receiving a data block sent by the first communication apparatus, wherein the data block comprises a fine granularity unit FGU base frame overhead, and the FGU base frame overhead comprises the request information.

24. The method according to claim 23, wherein the FGU base frame overhead comprises a reserved field, and the reserved field carries the request information.

25. A slot negotiation apparatus, used in a first communication apparatus serving as a receiving end, wherein the apparatus comprises:
a sending unit, configured to send request information to a second communication apparatus serving as a transmitting end, wherein the request information requests the second communication apparatus to initiate a negotiation request for switching a flexible Ethernet FlexE slot; and
a receiving unit, configured to receive the negotiation request sent by the second communication apparatus.

26. The apparatus according to claim 25, wherein the request information requests the second communication apparatus to initiate a negotiation request for switching a FlexE slot table.

27. The apparatus according to claim 25, wherein the request information requests the second communication apparatus to initiate a slot negotiation request of a fine granularity service.

28. The apparatus according to any one of claims 25 to 27, wherein the sending unit is configured to:
send the request information to the second communication apparatus after a fault of a link between the second communication apparatus and the first communication apparatus is recovered.

29. The apparatus according to claim 28, wherein that the fault of the link is recovered comprises at least one of the following:
optical signal jitter of the link disappears;
a bit error rate of the link is less than or equal to a bit error rate threshold;
a packet loss rate of the link is less than or equal to a packet loss rate threshold; and
a link layer fault of the link disappears.

30. The apparatus according to claim 25, wherein the sending unit is configured to:
send the request information to the second communication apparatus when a slot configuration used by the second communication apparatus is inconsistent with a slot configuration used by the first communication apparatus.

31. The apparatus according to claim 30, wherein the sending unit is configured to:
send the request information to the second communication apparatus when a slot table used by the second communication apparatus is inconsistent with a slot table used by the first communication apparatus.

32. The apparatus according to claim 30, wherein the sending unit is configured to:
send the request information to the second communication apparatus when a slot configuration of a fine granularity service used by the second communication apparatus is inconsistent with a slot configuration of a fine granularity service used by the first communication apparatus.

33. The apparatus according to claim 26, wherein the sending unit is configured to:
send a FlexE overhead to the second communication apparatus, wherein the FlexE overhead comprises the request information.

34. The apparatus according to claim 33, wherein the FlexE overhead comprises a reserved field, and the reserved field carries the request information.

35. The apparatus according to claim 27, wherein the sending unit is configured to:
send a data block to the second communication apparatus, wherein the data block comprises a fine granularity unit FGU base frame overhead, and the FGU base frame overhead comprises the request information.

36. The apparatus according to claim 35, wherein the FGU base frame overhead comprises a reserved field, and the reserved field carries the request information.

37. A slot negotiation apparatus, used in a second communication apparatus serving as a transmitting end, wherein the apparatus comprises:
a receiving unit, configured to receive request information sent by a first communication apparatus serving as a receiving end, wherein the request information requests the second communication apparatus to initiate a negotiation request for switching a flexible Ethernet FlexE slot; and
a sending unit, configured to send the negotiation request to the first communication apparatus.

38. The apparatus according to claim 37, wherein the request information requests the second communication apparatus to initiate a negotiation request for switching a FlexE slot table.

39. The apparatus according to claim 37, wherein the request information requests the second communication apparatus to initiate a slot negotiation request of a fine granularity service.

40. The apparatus according to any one of claims 37 to 39, wherein the receiving unit is configured to:
receive, after a fault of a link between the second communication apparatus and the first communication apparatus is recovered, the request information sent by the first communication apparatus.

41. The apparatus according to claim 40, wherein that the fault of the link is recovered comprises at least one of the following:
optical signal jitter of the link disappears;
a bit error rate of the link is less than or equal to a bit error rate threshold;
a packet loss rate of the link is less than or equal to a packet loss rate threshold; and
a link layer fault of the link disappears.

42. The apparatus according to claim 37, wherein the receiving unit is configured to: receive, when a slot configuration used by the second communication apparatus is inconsistent with a slot configuration used by the first communication apparatus, the request information sent by the first communication apparatus.

43. The apparatus according to claim 42, wherein the receiving unit is configured to: receive, when a slot table used by the second communication apparatus is inconsistent with a slot table used by the first communication apparatus, the request information sent by the first communication apparatus.

44. The apparatus according to claim 42, wherein the receiving unit is configured to:
receive, when a slot configuration of a fine granularity service used by the second communication apparatus is inconsistent with a slot configuration of a fine granularity service used by the first communication apparatus, the request information sent by the first communication apparatus.

45. The apparatus according to claim 38, wherein the receiving unit is configured to:
receive a FlexE overhead sent by the first communication apparatus, wherein the FlexE overhead comprises the request information.

46. The apparatus according to claim 45, wherein the FlexE overhead comprises a reserved field, and the reserved field carries the request information.

47. The apparatus according to claim 39, wherein the receiving unit is configured to:
receive a data block sent by the first communication apparatus, wherein the data block comprises a fine granularity unit FGU base frame overhead, and the FGU base frame overhead comprises the request information.

48. The apparatus according to claim 47, wherein the FGU base frame overhead comprises a reserved field, and the reserved field carries the request information.

49. A first communication apparatus, serving as a receiving end and comprising: a processor and a memory, wherein
the memory is configured to store instructions or a computer program; and
the processor is configured to execute the instructions or the computer program, to enable the first communication apparatus to perform the method according to any one of claims 1 to 12.

50. A second communication apparatus, serving as a receiving end and comprising: a processor and a memory, wherein
the memory is configured to store instructions or a computer program; and
the processor is configured to execute the instructions or the computer program, to enable the second communication apparatus to perform the method according to any one of claims 13 to 24.

51. A computer program product, comprising a program, and when the program is run on a processor, the method according to any one of claims 1 to 24 is implemented.

52. A communication system, wherein the communication system comprises:
a communication apparatus for performing the method according to any one of claims 1 to 12, and a communication apparatus for performing the method according to any one of claims 13 to 24.
